(19) Europäisches Patentamt
European Patent Office
Office européen des brevets

(11) Veröffentlichungsnummer: **0 122 587**
**B1**

(12) **EUROPÄISCHE PATENTSCHRIFT**

(45) Veröffentlichungstag der Patentschrift: **20.04.88**

(51) Int. Cl.⁴: **C 07 F 9/52**

(21) Anmeldenummer: **84103980.3**

(22) Anmeldetag: **10.04.84**

(54) **Verfahren zur Herstellung organischer Chlorphosphane.**

(30) Priorität: **16.04.83 DE 3313921**

(43) Veröffentlichungstag der Anmeldung:
**24.10.84 Patentblatt 84/43**

(45) Bekanntmachung des Hinweises auf die Patenterteilung:
**20.04.88 Patentblatt 88/16**

(84) Benannte Vertragsstaaten:
**AT BE CH DE FR GB LI NL**

(56) Entgegenhaltungen:
**SU - A - 362 026**

**BULL. OF ACADEMY OF SCIENCES OF USSR, Band 28, Nr. 2, Teil 2, Februar 1979, Plenum Publ. Corp., NEW YORK (US), Seiten 394-399, E.N. TSVETKOV et al.: "New Reactions Involving Phosphorus - Phosphorus Bond Cleavage in Tetraalkyldisphosphine Disulfides"**

(73) Patentinhaber: **HOECHST AKTIENGESELLSCHAFT, Postfach 80 03 20, D-6230 Frankfurt am Main 80 (DE)**

(72) Erfinder: **Kleiner, Hans-Jerg, Dr. Ing., Altkönigstrasse 11a, D-6242 Kronberg/Taunus (DE)**

**EP 0 122 587 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Organische Chlorphosphane sind Verbindungen der allgemeinen Formeln

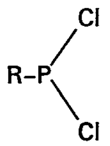

und

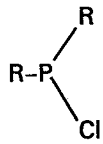

worin R = organischer Rest.

Sie sind hauptsächlich Zwischenprodukte auf verschiedenen Sachgebieten wie dem Pharma-, Pflanzenschutz-, Farbstoff- und Polymeren-Sektor.

Zu ihrer Herstellung ist eine Reihe verschiedener Methoden bekannt. Speziell aliphatische Chlorphosphane – insbesondere Methyl-dichlor-phosphan – können z.B. hergestellt werden nach der in dem SU-Urheberschein Nr. 362 026 beschriebenen Methode; die Methode besteht in der Umsetzung (Desoxygenierung) von Methylphosphonsäuredichlorid mit einem aliphatischen Phosphan – genannt sind speziell Tri-n-butylphosphan $(n\text{-}C_4H_9)_3P$ und Tri-i-amylphosphan $(i\text{-}C_5H_{11})_3P$ – im Molverhältnis 1:1 bei Temperaturen zwischen 175 und 220°C. Der Umsetzung liegt die folgende Reaktionsgleichung zugrunde:

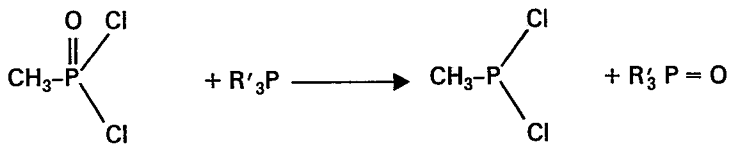


Methylphosphonsäuredichlorid Trialkylphosphan Methyldichlorphosphan Trialkylphosphanoxid

(R′ = aliphatischer Rest)

Die mitgeteilten Ausbeuten für das Methyldichlorphosphan liegen bei etwa 60% d.Th., diejenigen für das Trialkylphosphanoxid zwischen etwa 80 und 90% d.Th.

Ersetzt man bei dieser Reaktion das aliphatische Phosphan durch das technisch besser zugängliche und billigere Triphenylphosphan $(C_6H_5)_3P$, so wird – wie eigene Versuche gezeigt haben – nur eine für praktische Bedürfnisse unzureichende Ausbeute an Alkyl-dichlor-phosphan (unter 30% d.Th.) erhalten.

In dem Bestreben, die Reaktion gemäss dem vorerwähnten SU-Urheberschein weiter zu entwickeln und sie insbesondere so zu modifizieren, dass sie auch mit Triphenylphosphan (anstelle der aliphatischen Phosphane) mit brauchbaren Ausbeuten verläuft, wurde nun gefunden, dass dieses Ziel dadurch erreicht werden kann, dass man anstelle des (in der bekannten Reaktion) aliphatischen Phosphonsäuredichlorids aromatische oder heterocyclische Phosphonsäuredichloride einsetzt; auch der Einsatz aromatisch- oder heterocyclisch aliphatischer Phosphinsäurechloride ist möglich.

Erfindungsgegenstand ist daher ein Verfahren zur Herstellung organischer Chlorphosphane der Formel II

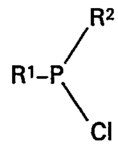

(II),

worin $R^1$ ein aromatischer oder heterocyclischer Rest und $R^2$ ein aliphatischer Rest oder Cl ist, durch Umsetzung organischer Phosphor-oxychloride mit einem organischen Phosphan bei einer Temperatur zwischen 100 und 350°C, das dadurch gekennzeichnet ist, dass man als organische Phosphor-oxychloride Verbindungen der Formel I

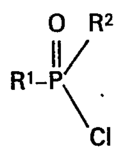

(I)

worin $R^1$ und $R^2$ die angegebene Bedeutung haben, und als organisches Phosphan Triphenylphosphan $(C_6H_5)_3P$ verwendet. Durch diese Umsetzung werden aromatische und heterocyclische Dichlorphosphane sowie aromatisch- und heterocyclisch-aliphatische Monochlorphosphane – die Di- und Monochlorphosphane werden hier mit II bezeichnet – in hohen Ausbeuten (meist zwischen etwa 75 und 100% d.Th.) erhalten nach der Reaktionsgleichung

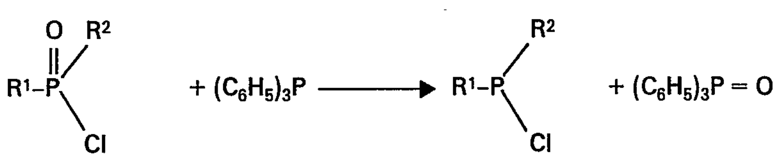


(I) Phosphan (II) Triphenylphosphanoxid

Das Gelingen und der glatte Verlauf dieser Umsetzung waren ausserordentlich überraschend, weil bei der Umsetzung rein aliphatischer Phosphonsäuredichloride mit Triphenylphosphan nur relativ wenig Dichlorphosphan entsteht.

Ausgangsprodukte für das erfindungsgemässe Verfahren sind die Verbindungen der Formel I und Triphenylphosphan.

In Formel I ist der aromatische oder heterocyclische Rest $R^1$ vorzugsweise der – gegebenenfalls durch inerte Gruppen substituierte – Phenyl- oder Thienylrest. Inerte Gruppen sind Gruppen, welche bei der hier stattfindenden Umsetzung nicht reagieren. Bevorzugte derartige inerte Gruppen sind hier Alkylgruppen, Halogenalkyl- und Halogengruppen, insbesondere $C_1$–$C_6$-Alkylgruppen (vor allem $CH_3$ und $C_2H_5$), $CF_3$ und Cl. Sowohl der Phenyl- als auch der Thienylrest können ein- oder mehrfach substituiert sein; bevorzugt ist der Phenylrest ein- oder zweifach substituiert und der Thienylrest unsubstituiert.

Wenn $R^2$ = Alkylrest, ist ein $C_1$–$C_6$-Alkylrest bevorzugt; besonders bevorzugt ist der $CH_3$- und der $C_2H_5$-Rest.

Von den beiden Möglichkeiten für $R^2$ (Alkylrest oder Cl) ist Cl bevorzugt.

Wenn $R^2$ = Alkylrest, sind die Verbindungen der Formel I aromatisch- oder heterocyclisch-aliphatische Phosphinsäurechloride wie z.B. Phenyl-methyl-phosphinsäurechlorid, Tolyl-methylphosphinsäurechlorid, Phenyl-äthyl-phosphinsäurechlorid, Thienyl-methyl-phosphinsäurechlorid etc. Die Verbindungen sind nach bekannten Methoden zugänglich.

Wenn in Formel I $R^2$ = Cl, sind die Verbindungen aromatische und heterocyclische Phosphonsäuredichloride wie z.B. Phenylphosphonsäuredichlorid, Tolylphosphonsäuredichloride, Xylylphosphonsäuredichloride, 3-Trifluor-methylphenylphosphonsäuredichlorid, 4-Chlorphenylphosphonsäuredichlorid, Thienylphosphonsäuredichlorid etc. Auch die Herstellung dieser Verbindungen geschieht nach bekannten Verfahren. So ist z.B. Phenylphosphonsäuredichlorid $C_6H_5P(O)Cl_2$ u.a. durch Phosgenierung von Phenylphosphonsäurediestern $C_6H_5P(O)(OR)_2$, worin R = organischer Rest erhältlich; Phenylphosphonsäurediester sind ihrerseits z.B. durch Umsetzung von Brombenzol mit Trialkylphosphiten in Gegenwart von Nickelbromid zugänglich.

Die organischen Phosphor-oxychloride der Formel I und das Triphenylphosphan werden normalerweise im (stöchiometrischen) Molverhältnis 1:1 eingesetzt. Auch andere Molverhältnisse sind jedoch denkbar. Sowohl das Phosphoroxychlorid I als auch das Triphenylphosphan können im Überschuss eingesetzt werden; der Überschuss bleibt dann bei der Reaktion unumgesetzt. Besonders überschüssiges organ. Phosphor-oxychlorid I eignet sich auch als Lösungs- und Verdünnungsmittel für die Umsetzung und bei der Aufarbeitung. Die Gegenwart noch anderer inerter Lösungs- und Verdünnungsmittel ist möglich, bringt aber keine Vorteile.

Die Reaktionstemperatur liegt vorzugsweise zwischen 170 und 250°C.

Normalerweise wird die Umsetzung bei Atmosphärendruck durchgeführt; auch die Anwendung von Überdruck ist jedoch möglich und kann in bestimmten Fällen geboten sein.

Zur Durchführung der Reaktion werden die organischen Phosphor-oxychloride der Formel I mit Triphenylphosphan entsprechend gemischt und zweckmässig unter Inertgasatmosphäre (z.B. Stickstoff) für eine bestimmte Zeit auf Reaktionstemperatur gehalten; die Reaktionsdauer beträgt durchschnittlich etwa 1 bis 20 Stunden.

Nach beendeter Umsetzung muss das gebildete Chlorphosphan II – d.i. Monochlorphosphan (aus Phosphinsäurechlorid I) oder Dichlorphosphan (aus Phosphonsäuredichlorid I) – isoliert werden. Als zweites Reaktionsprodukt fällt Triphenylphosphanoxid an. Die Isolierung kann z.B. destillativ erfolgen, beispielsweise auch mit Hilfe eines Dünnschichtverdampfers, der so eingestellt ist, dass die tiefsiedenden Chlorphosphane II und gegebenenfalls auch die organischen Phosphor-oxychloride I abdestillieren, während das Triphenylphosphanoxid und gegebenenfalls das Triphenylphosphan in den Destillationssumpf gelangen. Bisweilen kristallisiert auch die Hauptmenge des gebildeten Triphenylphosphanoxids aus dem Reaktionsgemisch aus; dann ist eine Vortrennung durch Filtration, gegebenenfalls auch in Gegenwart eines Verdünnungsmittels, möglich.

Durch das erfindungsgemässe Verfahren können Chlorphosphane mit einem an den Phosphor gebundenen aromatischen oder heterocyclischen Rest aus organischen Phosphor-oxychloriden unter Mitverwendung des (gegenüber den rein aliphatischen Phosphanen gemäss SU-Urheberschein Nr. 362 026 besser zugänglichen und billigeren) Triphenylphosphans in (gegenüber dem Verfahren des genannten SU-Urheberscheins) durchweg höheren Ausbeuten erhalten werden. Die Erfindung stellt daher eine fortschrittliche Weiterentwicklung des Verfahrens gemäss dem SU-Urheberschein Nr. 362 062 dar.

Die folgenden Beispiele sollen nun der weiteren Erläuterung der Erfindung dienen. Auf die Erfindungsbeispiele (A) folgt ein Vergleichsbeispiel (B), welches zeigt, dass bei der Umsetzung rein aliphatischer Phosphonsäuredichloride mit Triphenylphosphan nur relativ wenig Dichlorphosphan entsteht.

## A. Erfindungsbeispiele

### Beispiel 1

50 g (= 0,256 mol) Phenylphosphonsäuredichlorid und 40 g (=0,153 mol) Triphenylphosphan wurden unter Stickstoffatmosphäre 12 Stunden bei 230°C gerührt. Dann wurde bei 0,1 kPa destilliert bis zu einer Innentemperatur von 200°C. Das anfallende Destillat wurde nun mit Hilfe einer 70 cm langen, mit Raschig-Ringen gefüllten Silbermantel-Kolonne fraktioniert. Neben nicht umgesetztem Phenylphosphonsäuredichlorid wurden 25 g Dichlor-phenyl-phosphan erhalten. Das entspricht einer Ausbeute von 91% d.Th., bezogen auf eingesetztes Triphenylphosphan.

Beispiel 2

80 g (= 0,380 mol) p-Tolylphosphonsäuredichlorid und 32 g (= 0,123 mol) Triphenylphosphan wurden unter Stickstoffatmosphäre 8 Stunden bei 200°C gerührt. Dann wurde andestilliert bis zu einer Übergangstemperatur von 140°C bei 0,026 kPa. Man erhielt 70 g eines Destillates, das neben nicht umgesetztem p-Tolylphosphonsäuredichlorid 33,5% Dichlor-p-tolyl-phosphan enthielt (nach $^{31}P$-NMR-Spektrum). Das entspricht einer Ausbeute von 99% d.Th., bezogen auf eingesetztes Triphenylphosphan.

Beispiel 3

317 g (= 1,52 mol) o-Tolylphosphonsäuredichlorid und 400 g (= 1,53 mol) Triphenylphosphan wurden unter Stickstoffatmosphäre 17 Stunden bei 180°C gerührt. Dann wurde abgekühlt und vom auskristallisierten Triphenylphosphanoxid abgesaugt. Das Filtrat wurde bei 0,093 kPa destilliert bei einer Übergangstemperatur von ca. 80–100°C. Es wurden 220 g erhalten, die 45% Dichlor-o-tolylphosphan und 45% o-Tolylphosphonsäuredichlorid enthielten (nach $^{31}P$-NMR-Spektrum). Bei einem 68,5% Umsatz an o-Tolylphosphonsäuredichlorid wurde das Dichlor-o-tolyl-phosphan zu 50% d.Th. erhalten.

Aus dem auskristallisierten und abgesaugten Triphenylphosphanoxid konnten durch spezielle Reinigung weitere Mengen an den o-Tolylphosphonsäuredichlorid und dem Dichlor-o-tolylphosphan gewonnen werden.

Mit Hilfe einer 70-cm-Silbermantelkolonne, die mit Raschig-Ringen gefüllt ist, wurde das Destillat fraktioniert. Es wurden 90 g Dichlor-o-tolylphosphan, Kp.: 74°C/0,2 kPa erhalten.

Beispiel 4

133 g (= 1,0 mol) m-Xylylphosphonsäuredichlorid (2,4-Dimethylphenylphosphonsäuredichlorid) und 274 g (= 1,05 mol) Triphenylphosphan wurden unter Stickstoffatmosphäre 12 Stunden bei 220°C gerührt. Dann wurde das heisse Reaktionsgemisch in 600 ml Toluol bei Raumtemperatur unter Rühren getropft, nach 2 Stunden wurde vom auskristallisierten Triphenylphosphanoxid abgesaugt und mit eiskaltem Toluol nachgespült. Das Filtrat wurde im Wasserstrahlvakuum vom Toluol befreit und dann bis zu einer Innentemperatur 190°C bei ca. 0,175 kPa destilliert. Es wurden 200 g erhalten, die 63% Dichlor-m-xylyl-phosphan und 25% m-Xylylphosphonsäuredichlorid enthielten (nach $^{31}P$-NMR-Spektrum). Bei einem Umsatz von 79% betrug die Ausbeute etwa 75% d.Th. Mit Hilfe einer 70-cm-Silbermantelkolonne, die mit Raschig-Ringen gefüllt ist, wurde das Destillat fraktioniert. Dabei wurde reines Dichlor-m-xylyl-phosphan, Kp.: 85°C/0,093 kPa erhalten.

Beispiel 5

121 g (= 0,52 mol) 3,4-Dimethylphenylphosphonsäuredichlorid und 283 g (= 1,08 mol) Triphenylphosphan wurden unter Stickstoffatmosphäre 11 Stunden bei 200°C gerührt. Dann wurde andestilliert bis zu einer Innentemperatur von 170°C bei 0,067 kPa. Es wurden 120 g erhalten, die 45% Dichlor-3,4-dimethylphenyl-phosphan und 48% 3,4-Dimethylphenylphosphonsäuredichlorid enthielten. Das entspricht bei einem 52,2%igen Umsatz einer Ausbeute von ca. 92% d.Th. Die fraktionierte Destillation des Rohdestillates ergab reines Dichlor-3,4-dimethylphenyl-phosphan, Kp.: 107°C/0,44 kPa.

Analog wurde Dichlor-2,3-dimethylphenylphosphan, Kp.: 87°C/0,0133 kPa, hergestellt.

Beispiel 6

263 g (= 1,0 mol) 3-Trifluormethylphenylphosphonsäuredichlorid und 160 g (= 0,612 mol) Triphenylphosphan wurden unter Stickstoffatmosphäre 7 Stunden bei 200°C gehalten. Dann wurde bei 0,4–0,67 kPa destilliert bis zu einer Innentemperatur von 190°C. Es wurden 245 g erhalten, die 61,5% Dichlor-3,4-trifluoromethylphenylphosphan enthielten (nach $^{31}P$-NMR-Spektrum). Das entspricht einer Ausbeute von etwa 100%, bezogen auf eingesetztes Triphenylphosphan. Mit Hilfe einer 70-cm-Silbermantelkolonne, die mit Raschig-Ringen gefüllt ist, wurde das Destillat fraktioniert. Dadurch wurde das Dichlor-3-trifluormethylphenyl-phosphan, Kp.: 78°C/0,8 kPa, vom Ausgangsmaterial abgetrennt.

Beispiel 7

288 g (= 1,43 mol) 2-Thienylphosphonsäuredichlorid und 375 g (= 1,43 mol) Triphenylphosphan wurden 15 Stunden bei 200°C unter Stickstoffatmosphäre gerührt. Das heisse Reaktionsgemisch wurde anschliessend bei 200°C und ca. 0,133 kPa über einen Dünnschichtverdampfer destilliert. Es wurde ca. 200 g Destillat erhalten, das neben ca. 5% Bis(2-thienyl)-chlor-phosphan und geringen Mengen 2-Thienylphosphonsäuredichlorid aus Dichlor-(2-thienyl)-phosphan bestand. Die Ausbeute betrug etwa 75% d.Th. Durch Fraktionierung wurde reines Dichlor-(2-thienyl)-phosphan, Kp.: 48°C/0,027 kPa erhalten.

Beispiel 8

25 g (= 0,128 mol) Phenylphosphonsäuredichlorid und 30 g (= 0,115 mol) Triphenylphosphan wurden in einem Bombenrohr 3 Stunden bei 330°C gehalten. Es fielen 55 g an, die auf Grund des $^{31}P$-NMR-Spektrum neben Triphenylphosphanoxid und wenig Triphenylphosphan 16,5 g Dichlor-phenyl-phosphan und ca. 4 g Phenylphosphonsäuredichlorid enthielten. Bezogen auf eingesetztes Triphenylphosphan betrug die Ausbeute 86% d.Th. bei einem 93%igem Umsatz an Phenylphosphonsäuredichlorid.

Beispiel 9

116 g (= 0,615 mol) Methyl-p-tolyl-phosphinsäurechlorid und 161,5 g (= 0,617 mol) Triphenylphosphan wurden unter Stickstoffatmosphäre bei 200°C 18 Stunden gerührt. Dann wurde bei 0,53 kPa destilliert. Bei einer Übergangstemperatur von 90°C wurden 27 g Chlor-methyl-p-tolyl-phosphan und bei 0,067 kPa und einer Übergangstemperatur von ca. 120°C 80 g Methyl-p-tolyl-phosphinsäurechlorid erhalten. Bei einem Umsatz von 25% d.Th. betrug die Ausbeute 82% d.Th.

Beispiel 10

167 g (= 0,73 mol) p-Chlorphenylphosphansäuredichlorid und 121 g (= 0,46 mol) Triphenylphosphan wurden unter Stickstoffatmosphäre 2 Stunden bei 180°C und 10 Stunden bei 200°C gerührt. Dann wurde bei 0,04°C kPa destilliert bis zu einer Übergangstemperatur von 140°C. Es wurden 145 g erhalten, die 58,5% p-Chlorphenyl-dichlor-phosphan und 41,5% p-Chlorphenylphosphansäuredichlorid enthielten (nach $^{31}P$-NMR-Spektrum). Mit Hilfe einer 70-cm-Silbermantelkolonne, die mit Raschig-Ringen gefüllt ist, wurde das Destillat fraktioniert. Es wurde reines p-Chlorphenyl-dichlor-phosphan (Kp.: 71°C/0,093 kPa) erhalten. Das entspricht einer Ausbeute von 85% d.Th., bezogen auf eingesetztes Triphenylphosphan.

B. Vergleichsbeispiel

67,2 g (= 0,46 mol) Ethanphosphonsäuredichlorid und 60 g (= 0,23 mol) Triphenylphosphan wurden unter Stickstoffatmosphäre bei 195°C unter schwachem Rückfluss gerührt. Während 22 Stunden sank die Innentemperatur unter Rückflussbedingungen auf 185°C. Nach dem Abkühlen wurde bei 5,07 kPa destilliert. Dabei wurden bei einer Übergangstemperatur von 26°C ca 8 g Dichlor-ethyl-phosphan, die in einer gekühlten Vorlage kondensierten, und dann bei einer Übergangstemperatur von 80°C bis zu einer Innentemperatur von 200°C 37 g Ethanphosphonsäuredichlorid erhalten. Der Destillationsrückstand wurde anschliessend bei 0,1 kPa destilliert. Dabei wurden ca. 45 g nicht umgesetztes Triphenylphosphan erhalten.

Bezogen auf das eingesetzte Triphenylphosphan beträgt die Ausbeute an Dichlor-ethyl-phosphan ca. 27% d.Th.

### Patentansprüche

1. Verfahren zur Herstellung organischer Chlorphosphane der Formel II

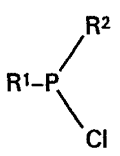

(II),

worin $R^1$ ein aromatischer oder heterocyclischer Rest und $R^2$ ein aliphatischer Rest oder Cl ist, durch Umsetzung organischer Phosphor-oxychloride mit einem organischen Phosphan bei einer Temperatur zwischen 100 und 350°C, dadurch gekennzeichnet, dass man als organische Phosphor-oxychloride Verbindungen der Formel I

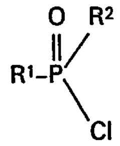

(I)

worin $R^1$ und $R^2$ die angegebene Bedeutung haben, und als organisches Phosphan Triphenylphosphan $(C_6H_5)_3P$ verwendet.

2. Verfahren nach Anspruch 1, dadurch gekennzeichnet, dass in den Verbindungen der Formel I
$R^1$ ein gegebenenfalls durch inerte Gruppen substituierter Phenyl- oder Thienylrest und
$R^2$ ein $C_1$–$C_6$-Alkylrest oder Cl, vorzugsweise nur Cl ist.

3. Verfahren nach Anspruch 1 oder 2, dadurch gekennzeichnet, dass man die Umsetzung bei Temperaturen zwischen 170 und 250°C durchführt.

### Claims

1. A process for the production of organic chlorophosphanes of the formula II

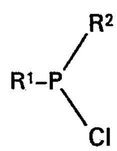

(II)

in which $R^1$ represents an aromatic or heterocyclic group and $R^2$ an aliphatic group or Cl, by reacting organic phosphorus oxychlorides with an organic phosphane at a temperature between 100 and 350°C, characterized in using, as organic phosphorus oxychlorides, compounds of the formula I

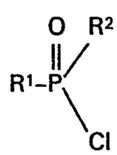

(I)

in which $R^1$ and $R^2$ have the afore-mentioned meaning, and using triphenylphosphane $(C_6H_5)_3P$ as the organic phosphane.

2. The process as claimed in claim 1, wherein, in the compounds of the formula I,
$R^1$ represents a phenyl or thienyl radical which is optionally substituted by inert groups and
$R^2$ represents a $C_1$–$C_6$-alkyl group or Cl, preferably only Cl.

3. The process as claimed in claim 1 or 2, wherein the reaction is carried out at temperatures between 170 and 250°C.

### Revendications

1. Procédé pour préparer des chlorophosphines organiques répondant à la formule II:

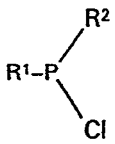

(II)

dans laquelle $R^1$ représente un radical aromatique ou hétérocyclique et $R^2$ un radical aliphatique ou Cl, par réaction d'oxychlorures de phosphore organiques avec une phosphine organique, à une température comprise entre 100 et 350°C, procédé caractérisé en ce qu'on utilise, comme oxychlorures de phosphore organiques, des composés répondant à la formule I:

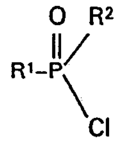

(I)

dans laquelle $R^1$ et $R^2$ ont les significations précédemment données, et, comme phosphine organique, la triphénylphosphine $(C_6H_5)_3P$.

2. Procédé selon la revendication 1, caractérisé en ce que, dans les composés de formule I: $R^1$ représente un radical phényle ou thiényle éventuellement porteur de substituants inertes et $R^2$ représente un radical alkyle en $C_1$–$C_6$ ou Cl, de préférence seulement Cl.

3. Procédé selon l'une des revendications 1 et 2, caractérisé en ce qu'on effectue la réaction à des températures comprises entre 170 et 250°C.